# EUROPÄISCHE PATENTSCHRIFT

(11) **EP 0 509 408 B1**
(45) Veröffentlichungstag und Bekanntmachung des Hinweises auf die Patenterteilung: **08.02.1995**
(21) Anmeldenummer: 92106185.9
(22) Anmeldetag: 09.04.1992
(51) Int. Cl.: G01V 3/11

(54) **Metalldetektor mit akustischer Signalgabe**
Metal detector with acoustic signal delivery
Détecteur de métaux avec acoustique déclenchant un signal

(30) Priorität: 16.04.1991 DE 4112406
(43) Veröffentlichungstag der Anmeldung: 21.10.1992
(73) Patentinhaber: FIRMA ING. KLAUS EBINGER, D-51149 Köln (DE)
(72) Erfinder: Ebinger, Klaus, D-5000 Köln 90 (DE)
(74) Vertreter: Heim, Hans-Karl, Dipl.-Ing.

(56) Entgegenhaltungen:
- DE-A- 3 538 228
- GB-A- 1 446 741
- US-A- 4 470 015

## Beschreibung

Die Erfindung betrifft einen Metalldetektor mit akustischer Signalgabe der im Oberbegriff des Anspruchs 1 angegebenen Art.

Metalldetektoren sind unter anderem als Handsonden im Bereich der Fluggastkontrolle im Einsatz. Wesentlich ist dabei, daß das Sicherheitspersonal mit Hilfe dieser speziellen Suchgeräte große Metallobjekte von kleinen Metallobjekten zuverlässig unterscheiden kann. Als relativ großes Suchobjekt gilt bei diesem speziellen Einsatz jede Art von metallischen Waffen, seien es nun Schußwaffen oder Messer.

Metalldetektoren sind in unterschiedlichsten Ausführungsformen bekannt, wobei die Signalgabe entweder akustisch über Kopfhörer oder Lautsprecher oder optisch über Anzeigeinstrumente oder Leuchtdioden erfolgt. Gerade bei Fluggastkontrollen wird der akustischen Signalgabe der Vorzug gegeben, weil diese Art der Signalgabe den Vorzug aufweist, daß das Sicherheitspersonal sich voll auf die Sucharbeit als solche zu konzentrieren vermag.

Im Bereich der Sicherheitstechnik, vor allem bei der genannten Fluggastkontrolle, ist die Art der akustischen Signalgabe von großer Bedeutung. So muß das akustische Signal bei der jeweils vorherrschenden Lärmumgebung deutlich vernehmbar sein, und es sollte außerdem Rückschlüsse auf die Art der aufzuspürenden Suchobjekte zulassen. Metalldetektoren der eingangs genannten Art zeichnen sich dadurch aus, daß das auf ein metallisches Suchobjekt ansprechende akustische Signal mit einem gewissen Amplituden- oder Frequenzhub erzeugt wird. Dies hat zur Folge daß das Suchgerät beziehungsweise der Metalldetektor im Ruhezustand oder bei Abwesenheit eines metallischen Suchobjekts kein akustisches Signal abgibt. Hingegen läuft bei Annäherung der Sonde des Metalldetektors an ein metallisches Suchobjekt das akustische Signal mit tiefer Frequenz an, um bei weiterer Annäherung an das Suchobjekt bis zu einer maximalen Tonhöhe von ca. 3 bis 4 kHz anzusteigen, wenn es sich um einen Metalldetektor mit Frequenzhub handelt. Sobald die maximale Tonhöhe und/oder Lautstärke der akustischen Signalgabe erreicht ist, sind weitere Informationen über das metallische Suchobjekt mit diesem Metalldetektor nicht gewinnbar. Im Normalfall bleibt dadurch die Feinbeschaffenheit des metallischen Suchobjektes im dunkeln, so daß dieses für nähere Feststellungen in herkömmlicher und aufwendiger Art optisch untersucht werden muß, was nicht nur Gefahren für das betreffende Sicherheitspersonal, sondern auch entsprechend lange Wartezeiten beim Einsatz des Detektors bei Fluggastkontrollen zur Folge hat.

Bestenfalls vermag eine geübte Suchperson große und kleine Metallteile aus der jeweiligen Geometrie der akustischen Signalgabe zu ermitteln. So zeigt in aller Regel eine kurze, impulsartige Signalabgabe ein ungefährliches Kleinteil an. Bei größeren Objekten entsprechenden intensiveren Anzeigesignalen geht der Metalldetektor jedoch relativ schnell in die akustische Sättigung über, die eine Aufklärung weiterer Details der Suchobjekte verhindert.

Ein weiterer Nachteil herkömmlicher Metalldetektoren besteht in ihrer rein dynamischen Arbeitsweise. Bei dieser Arbeitsart wird eine Relativbewegung zwischen Suchobjekt und Detektorsonde vorausgesetzt. Das heißt, eine Signalgabe erfolgt ausschließlich bei einer Bewegung des Metalldetektors mit Bezug auf das Suchobjekt. Diese Betriebsart hat zwar den Vorteil, daß der Metalldetektor sich auf die lokalen Untersuchungsbedingungen einstellt. Größere Metallmassen, wie Eisenbewehrungen im Boden, Temperatureinflüsse und dergleichen werden bei der dynamischen Betriebsart in gewissen Grenzen automatisch eliminiert. Bei einer verdächtigen Signalgabe hingegen wäre es von Vorteil, wenn der Metalldetektor statisch reagieren würde. "Statisch" bedeutet dabei, daß die Signalgabe auch dann erhalten bleibt, wenn keine Relativbewegung zwischen Metalldetektor und Suchobjekt vorliegt.

Ein Metalldetektor der eingangs genannten Art ist aus DE-A-3 538 228 entnehmbar. Er ist mit einem System zum automatischen Umschalten vom dynamischen zum quasi-statischen Suchen ausgerüstet. Diese Druckschrift beschreibt auch die Möglichkeit einer akustischen Erkennung des Umschaltens, wenn der Metalldetektor mit zwei Verstärkungskanälen ausgebildet ist.

Auch die US-A-4 470 015 beschreibt einen Metalldetektor. Dort werden die elektrischen Signale über Phasenschieber, Modulatoren, Demodulatoren und Filter geleitet, um zwischen Nichteisenmetall und Eisenmetall unterscheiden zu können und Informationen über den Untergrund zu gewinnen.

Der vorliegenden Erfindung liegt die **Aufgabe** zugrunde, einen Metalldetektor mit akustischer Signalgabe der eingangs genannten Art zu schaffen, mit dem prägnantere Detailinformationen über die Suchobjekte zu gewinnen sind als es beim bisherigen Stand der Technik, selbst bei Verwendung von zwei Verstärkungskanälen, möglich ist.

Gelöst wird diese Aufgabe durch die kennzeichnenden Merkmale des Anspruchs 1. Vorteilhafte Weiterbildungen der Erfindung sind in den abhängigen Ansprüchen angegeben.

Erfindungsgemäß ist es also mit anderen Worten vorgesehen, die akustische Signalgabe durch eine Art von Tremolo-Effekt zu verfeinern, der dadurch zustandekommt, daß das Suchsignal unterhalb oder oberhalb von einem bestimmten Frequenzwert und/oder einem bestimmten Amplitudenpegel einer Modulation unterzogen wird, und zwar in Abhängigkeit vom Abstand der Detektorsonde zum Suchobjekt. Grundsätzlich kann die Schwelle, an welcher die zusätzliche Suchsignalmodulation ausgelöst wird, beliebig gewählt werden. Vorteilhafterweise ist es jedoch vorgesehen, den Frequenz- und/oder Amplitudenhub des akustischen Signals zur Groberkennung des Suchobjektes voll auszunützen und den Tremolo-Effekt erst nachfolgend zur Feinuntersuchung einzusetzen. Mit anderen Worten bedeutet dies, daß, ähnlich wie beim Stand der Technik, die akustische Signalgabe bis in die akustische Sättigung gefahren wird, und zwar durch Annäherung an das melische Suchobjekt. Im Gegensatz zum Stand der Technik wird dieser Untersuchungsabschnitt bei der Erfindung nur als Vorstufe für eine nachfolgende feinere Untersuchung verwendet. Während nämlich beim Stand der Technik mit Erreichen der akustischen Sättigung der Informationsfluß beendet ist, beginnt an diesem Punkt gemäß der Erfindung erst die eigentlich interessante und wichtige Feinuntersuchung des Metallobjekts, und zwar mit Hilfe des entfernungsabhängig modulierten Suchsignals.

Zur optimalen Abstimmung auf die jeweilige Untersuchungsumgebung und das detektierte metallische Suchobjekt ist es gemäß einer vorteilhaften Weiterbildung der Erfindung vorgesehen, die Ansprechschwelle für die dynamische Modulation des Suchsignals einstellbar auszubilden.
Die Modulationseinrichtung kann in unterschiedlichster Weise realisiert werden, umfaßt jedoch vorteilhafterweise einen spannungsgesteuerten Signalgenerator, dessen Ausgangssignal in Abhängigkeit vom Sondenerfassungssignal variiert wird. Das Ausgangssignal des spannungsgesteuerten Signalgenerators wird dann in geeigneter Weise zur Modulation der akustischen Signalgabe eingesetzt.

Gemäß einer besonders vorteilhaften Weiterbildung der Erfindung ist es vorgesehen, die Modulationseinrichtung so auszulegen, daß das modulierte Suchsignal auch bei ruhender Sonde erzeugt wird. Diese Weiterbildung der Erfindung erlaubt einen statischen Suchbetrieb, wenn das Suchsignal zur Feinuntersuchung in Art eines Tremolo-Effekts moduliert wird. Im Falle der Fluggastkontrolle bedeutet dies, daß die Sicherheitsperson nicht darauf angewiesen ist, Informationen über das Suchobjekt durch die Anzeigegeometrie zu ermitteln, sondern vielmehr dadurch, daß das Objekt gewissermaßen gezielt und langsam abgetastet werden kann. Auf diese Weise lassen sich Informationen über das Suchobjekt gewinnen, die einen eindeutigen Schluß über dessen Eigenschaften zulassen, nämlich über Größe und Gestalt des Metallobjekts. Damit eignet sich der erfindungsgemäße Metalldetektor besonders gut zur Verwendung als Waffendetektor. Eine statische Betriebsart der vorgenannten Art läßt sich vorteilhafterweise durch die Verwendung einer dynamischen Kondensatorkopplung oder durch die Verwendung eines Integrators im Signalweg zum akustischen Wandler des Metalldetektors erzielen.

Gemäß der Erfindung ergibt sich ohne weiteres der wesentliche Vorteil, daß durch die Modulation von einem dynamischen Betrieb auf eine statische Betriebsweise umgeschaltet wird.

Nachfolgend soll die Erfindung anhand der Zeichnung näher erläutert werden; in dieser zeigen:
- Fig. 1: das schematische Schaltbild einer ersten Ausführungsform des erfindungsgemäßen Metalldetektors,
- Fig. 2: wie Fig. 1 nur einer zweiten Ausführungsform
- Fig. 3: wie Fig. 1 nur einer dritten Ausführungsform und
- Fig. 4: eine Darstellung der Wirkungsweise des erfindungsgemäßen Metalldetektors anhand zweier Diagramme.

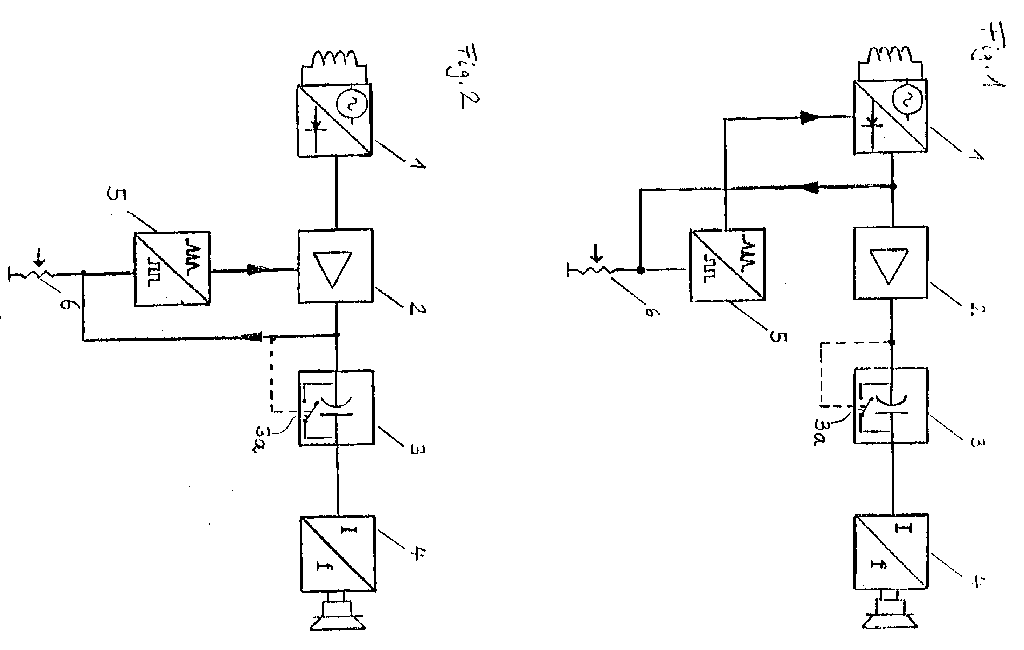

In den Figuren 1 bis 3 ist jeweils ein schematisches Schaltbild eines typischerweise als Waffendetektor eingesetzten Metalldetektors dargestellt. Dieser umfaßt einen Suchoszillator 1 mit Suchspule und Gleichrichter, einen vom Gleichspannungssignal des Suchoszillators 1 beaufschlagten Gleichspannungssignalverstärker 2, dem eine dynamische Kondensatorkopplung oder ersatzweise ein Integrator 3 nachgeschaltet ist, dessen Ausgang an einen Spannungs-/Frequenzwandler 4 angelegt ist, der zur Erzeugung eines akustischen Signals dient, das über einen schematisch dargestellten Lautsprecher abgegeben wird.

Die Hintereinanderschaltung der Bauteile 1 bis 4 erlaubt die Realisierung einer dynamischen Betriebsart des Metalldetektors, die an sich bekannt ist und zur Erzeugung eines akustischen Signals mit einem vorgegebenen Frequenz- und/oder Amplitudenhub führt, das in Abhängigkeit vom Abstand des Suchoszillators 1 zu einem metallischen Suchobjekt mit Bezug auf seine Frequenz und/oder seine Amplitude ansteigt, wenn der Abstand der Sonde zum Suchobjekt führt. Mit Erreichen der maximalen Signalfrequenz und/oder der maximalen Signalamplitude ist der Dynamikbereich eines derartigen Metalldetektors ausgeschöpft, das heißt, eine noch größere Annäherung an das metallische Suchobjekt ergibt keine weitere Änderung der Signalfrequenz und/oder der Signalamplitude, so daß Aussagen über das metallische Suchobjekt durch die Dynamik des Metalldetektors beschränkt sind. Dieses bezüglich seiner Dynamik beschränkte Verhalten des Metalldetektors läßt sich in unterschiedlicher Weise realisieren. Im dargestellten Ausführungsbeispiel ist eine Lösung gezeigt, welche eine Kondensatorkopplung enthält, die bewirkt, daß Änderungen des Suchsignals, die mit sehr niedriger Frequenz erfolgen, von der Kondensatorkopplung eliminiert beziehungsweise nicht übertragen werden. Dahingegen werden schnelle Änderungen des Suchsignals über den Signalweg voll übertragen und zur akustischen Anzeige gebracht.

Um das Ansprechverhalten des Metalldetektors über die vorstehend aufgezeigten dynamischen Grenzen hinaus zu erweitern, ist eine Modulationseinrichtung 5 vorgesehen, die beispielsweise ein Signalgenerator zur Erzeugung einer Rechteck- oder Sägezahnspannung ist, wobei die Spannungserzeugung in Abhängigkeit einer extern zugeführten Steuerspannung erfolgt.

In Fig. 1 ist der Signalgenerator 5 mit seinem Steuereingang an den Ausgang des Suchoszillators 1 angeschlossen. Mittels eines Reglers 6, der in den Figuren 1 bis 3 als Potentiometer ausgebildet ist, wird die Ansprechschwelle des Signalgenerators 5 eingestellt. Sobald die Ausgangsspannung des Suchoszillators 1 einen bestimmten Wert überschreitet, setzt die Signalerzeugung durch den Generator 5 ein, und dieser moduliert in der in Figur 1 dargestellten Ausführungsform mit seinem Ausgangssignal die Spannung des Suchoszillators, der durch die so erzeugte Wechsel- oder Modulationsspannung das weitere akustische Anzeigesignal entsprechend moduliert. Dabei wird in diesem Betriebszustand ein statisches Untersuchungsverhalten erzwungen, weil der Kondensator im Regler 3 durch Schließen eines elektronischen Schalters 3a kurzgeschlossen ist, der parallel zum Kondensator geschaltet und durch die Ausgangsspannung des Verstärkers 2 gesteuert ist.

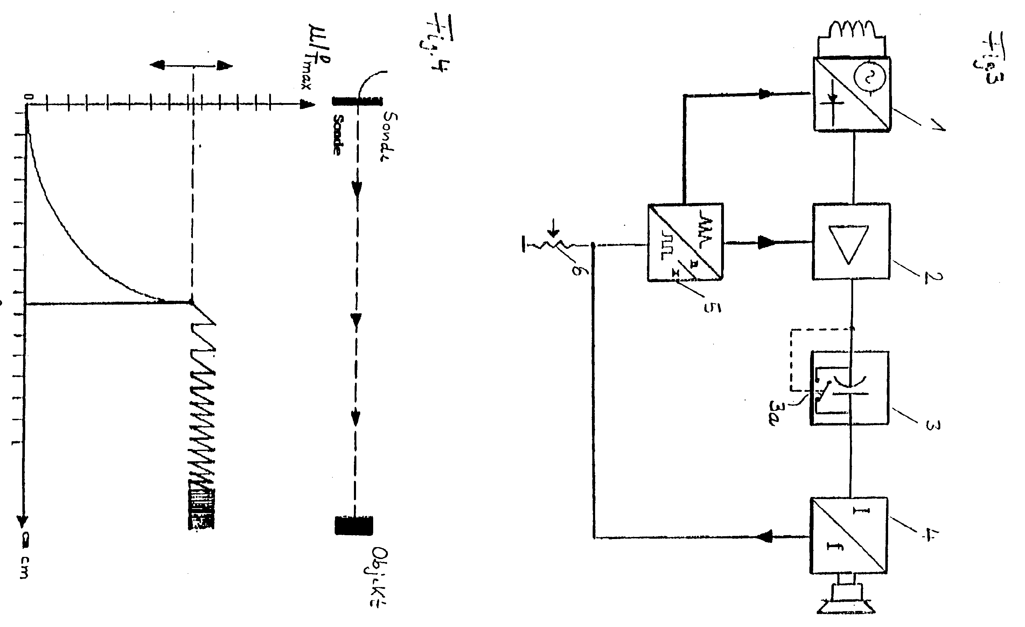

Fig. 2 zeigt eine Beaufschlagung
des spannungsgesteuerten Signalgenerators 5 durch ein Gleichspannungssignal, das vom Ausgang des Gleichspannungsverstärkers 2 abgeleitet ist. Bei diesem Ausführungsbeispiel moduliert das Ausgangssignal des Generators 5 die Ausgangsspannung des Verstärkers 2. Wirkung und Funktion dieses Ausführungsbeispiels sind dieselben wie bei der Schaltung gemäß Fig. 1.

Bei dem in Fig. 3 dargestellten Ausführungsbeispiel des Metalldetektors wird die Ausgangsspannung des Spannungs-/Frequenzwandlers 4 über einen nicht dargestellten Spannungsteiler dem Steuereingang des Signalgenerators 5 zugeführt, und dieser moduliert mit seiner Ausgangsspannung wie im Ausführungsbeispiel gemäß Fig. 1 die Spannung des Suchoszillators 1. Die Funktion des Ausführungsbeispiels gemäß Fig. 3 entspricht demnach grundsätzlich derjenigen von Fig. 1.

Nachfolgend soll anhand der Fig. 4 die Funktionsweise des vorstehend anhand unterschiedlicher Ausführungsvarianten beschriebenen Metalldetektors näher dargestellt werden.

Im oberen Teil der Fig. 4 ist schematisch die Annäherung des Metalldetektors an ein metallisches Suchobjekt verdeutlicht. Unter dieser Darstellung befindet sich ein Diagramm auf dessen Abszisse die Entfernung des Detektors vom Objekt in Zentimetern aufgetragen ist, während auf der Abszisse des Diagramms die Form des akustischen Signals aufgetragen ist, welches vom Spannungs-/Frequenzwandler 4 über den Lautsprecher abgegeben wird.

Aus der Darstellung von Fig. 4 wird deutlich, daß beim Überschreiten einer vorgegebenen Ansprechschwelle das akustische Signal hervorgerufen wird und mit zunehmender Annäherung an das metallische Objekt mit Bezug auf seine Frequenz ansteigt. Bei einem bestimmten Detektor-/Objektabstand ist dann das Maximum oder die Sättigung des akustischen Signals erreicht oder das Maximum seiner Lautstärke. Hier endet der Dynamikbereich herkömmlicher Metalldetektoren und damit auch jegliche weitere Informationsabgabe. Beim Erreichen des Tonfrequenz- oder Amplitudenmaximums setzt bei dem vorstehend näher beschriebenen Metalldetektor aufgrund des Modulators 5 eine abstandsabhängige Tonmodulation ein, die das akustische Signal impulsartig mit zunehmender Frequenz so verändert, daß die weitere Annäherung an das metallische Suchobjekt akustisch aufgelöst und damit wahrgenommen werden kann. Durch eine Veränderung der Ansprechschwelle für die Modulation mit Hilfe des Potentiometers 6 läßt sich die gewinnbare Information an den jeweiligen Anwendungsfall optimal anpassen.

Das intermittierende Einsetzen des akustischen Tonsignals bewirkt gleichzeitig sein statisches Verhalten, da die Koppelkondensatorschaltung 3, welche für die dynamische Nachführung zuständig ist, durch Schließen des Schalters 3a kurzgeschlossen wird, so daß die das Tonsignal bewirkende Spannung einen konstanten Pegel einnimmt, der von einer Modulation überlagert ist, der einen Tremoloeffekt des Tonsignals bewirkt. Geschlossen wird der elektronische Schalter durch die Steuerspannung aus dem Verstärker 2. Die Koppelkondensatorschaltung 3 kann auch durch einen Integrator ersetzt werden, der ebenfalls einen dynamischen Suchbetrieb bewirken kann.

Der vorstehend näher beschriebene Metalldetektor kann alternativ auch ohne eine Suchvorstufe mit dynamischem Verhalten ausgebildet sein. In diesem Falle erfolgt die Suchobjektermittlung ausschließlich mit Hilfe der Modulation eines Tonsignals fester Frequenz und/oder Amplitude, um die Feinstruktur des Suchobjekts festzustellen.

## Patentansprüche

1. Metalldetektor mit akustischer Signalgabe, bei welchem ein akustisches Signal mit einem vorgegebenen Frequenz- und/oder Amplitudenhub in Abhängigkeit vom Abstand einer Detektorsonde zu einem metallischen Suchobjekt derart erzeugbar ist, daß die Signalfrequenz und/ oder die Signalamplitude mit abnehmendem Abstand der Detektorsonde vom Suchobjekt ansteigt,
dadurch **gekennzeichnet**,
daß eine Modulationseinrichtung (5) vorhanden ist, durch die das akustische Signal in seiner Frequenz- und/oder Amplitude modulierbar ist, und daß die Modulationseinrichtung (5) bei einem bestimmten Frequenzwert und/oder einem bestimmten Amplitudenpegel des akustischen Signals schaltbar ist, so daß in Abhängigkeit von der Entfernung der Detektorsonde zum Suchobjekt das akustische Signal zwischen einem kontinuierlichen und einem tremolierenden Ton veränderbar ist.

2. Metalldetektor nach Anspruch 1,
dadurch **gekennzeichnet**,
daß die Ansprechschwelle für die Modulation des akustischen Signals einstellbar (6) ist.

3. Metalldetektor nach Anspruch 1 oder 2,
dadurch **gekennzeichnet**,
daß das akustische Signal unterhalb einer bestimmten vorgebbaren Frequenz und/oder Amplitude kontinuierlich und oberhalb tremolierend ausgebildet ist.

4. Metalldetektor nach Anspruch 1 bis 3,
dadurch **gekennzeichnet**,
daß die Modulationseinrichtung (5) einen spannungsgesteuerten Signalgenerator umfaßt, an dessen Spannungssteuereingang ein Steuersignal anliegt, das vom Sondensignal abgeleitet ist.

5. Metalldetektor nach Anspruch 4,
dadurch **gekennzeichnet**,
daß der Signalgenerator (5) ein Rechteckgenerator ist.

6. Metalldetektor nach Anspruch 4,
dadurch **gekennzeichnet**,
daß der Signalgenerator (5) ein Sägezahngenerator ist.

7. Metalldetektor nach einem der Ansprüche 4 bis 6,
dadurch **gekennzeichnet**,
daß das Ausgangssignal des spannungsgesteuerten Signalgenerators (5) ein vom Sondensignal abgeleitetes Signal moduliert, aus dem das akustische Signal gewonnen wird.

8. Metalldetektor nach Anspruch 7,
dadurch **gekennzeichnet**,
daß das Ausgangssignal des spannungsgesteuerten Signalgenerators (5) die Spannung des Sondensuchoszillators (1) moduliert.

9. Metalldetektor nach Anspruch 7,
dadurch **gekennzeichnet**,
daß das Ausgangssignal des spannungsgesteuerten Signalgenerators (5) das gleichgerichtete Ausgangssignal des Sondensuchoszillators (1) moduliert.

10. Metalldetektor nach einem der Ansprüche 1 bis 9,
dadurch **gekennzeichnet**,
daß die Modulatoreinrichtung (5) so ausgelegt ist, daß das modulierte Suchsignal auch bei ruhender Sonde erzeugt wird.

11. Metalldetektor nach Anspruch 10,
dadurch **gekennzeichnet**,
daß das modulierte Sondensuchsignal eine dynamische Kondensatorkopplungsschaltung (3) durchläuft, bevor es in ein akustisches Signal umgewandelt wird.

12. Metalldetektor nach Anspruch 10,
dadurch **gekennzeichnet**,
daß das modulierte Sondensuchsignal einen Integrator durchläuft, bevor es in ein akustisches Signal umgewandelt wird.

13. Verwendung des Metalldetektors nach einem der vorangehenden Ansprüche als Waffendetektor.

## Claims

1. A metal detector having an acoustic signal delivery in which an acoustic signal having a predetermined increase in frequency and/or amplitude can be produced in dependence upon the distance of a detector probe to a metallic object detected, that the signal frequency and/or the signal amplitude increases with decreasing distance of the detector probe to the object detected. characterised in that a modulation device (5) is provided through which the acoustic signal can be modulated in its frequency and/or amplitude and that the modulation device (5) can be switched at a certain frequency value and/or a certain amplitude level of the acoustic signal, so that in dependence upon the distance of the detector probe to the object detected the acoustic signal can be altered between a continuous tone and a tremulous tone.

2. A metal detector according to claim 1, characterised in that the response threshold for modulation of the acoustic signal can be set (6).

3. A metal detector according to claim 1 or 2, characterised in that the acoustic signal is formed continuously below a certain predeterminable frequency and/or amplitude and is formed tremulously above a certain predeterminable frequency and/or amplitude.

4. A metal detector according to claims 1 to 3, characterised in that the modulation device (5) comprises a voltage controlled signal generator to the voltage control input of which a control signal is applied, which is derived from the probe signal.

5. A metal detector according to claim 4, characterised in that the signal generator (5) is a square (wave pulse) generator.

6. A metal detector according to claim 4, characterised in that the signal generator is a saw tooth (wave pulse) generator.

7. A metal detector according to any of the claims 4 to 6, characterised in that the output signal of the voltage controlled signal generator (5) modulates a signal derived from the probe signal from which the acoustic signal is attained.

8. A metal detector according to claim 7, characterised in that the output signal of the voltage controlled signal generator (5) modulates the voltage of the probe detecting oscillator (1).

9. A metal detector according to claim 7, characterised in that the output signal of the voltage controlled signal generator (5) modulates the direct current rectified output signal of the probe detecting oscillator (1).

10. A metal detector according to any of the claims 1 to 9, characterised in that the modulator device (5) is designed such that the modulated detecting signal is also generated with the probe inactivated.

11. A metal detector according to claim 10, characterised in that the modulated probe detecting signal passes through a dynamic capacitor coupling circuit (3) before it is converted into an acoustic signal.

12. A metal detector according to claim 10, characterised in that the modulated probe detecting signal passes through an integrator before it is converted into an acoustic signal.

13. Use of the metal detector according to any of the previous claims as a weapon detector.

## Revendications

1. Détecteur de métaux à signal acoustique dans lequel, en fonction de la distance entre une sonde détectrice et un objet métallique recherché, un signal acoustique de fréquence et/ou d'amplitude prédéterminées est produit de manière telle que la fréquence du signal et/ou l'amplitude du signal augmente au fur et à mesure que la distance de la sonde détectrice par rapport à l'objet diminue, **caractérisé** par le fait qu'il est prévu un dispositif de modulation (5) au moyen duquel la fréquence et/ou l'amplitude du signal acoustique peuvent être modulées et par le fait que le dispositif de modulation (5) est déclenché pour une valeur de fréquence déteminée et/ou un niveau d'amplitude déterminé du signal acoustique, de sorte que le signal acoustique évolue entre un son continu et un son tremblé en fonction de la distance séparant la sonde détectrice de l'objet recherché.

2. Détecteur de métaux selon la revendication 1, **caractérisé** par le fait que le seuil de déclenchement pour la modulation du signal acoustique est réglable (6).

3. Détecteur de métaux selon la revendication 1 ou la revendication 2, **caractérisé** par le fait que le signal acoustique est continu au-dessous d'une certaine fréquence et/ou amplitude prédéterminée et tremblé au-dessus.

4. Détecteur de métaux selon les revendications 1 à 3, **caractérisé** par le fait que le dispositif de modulation (5) comprend un générateur de signal commandé en tension à l'entrée de commande en tension duquel on applique un signal de commande qui est dérivé du signal de la sonde.

5. Détecteur de métaux selon la revendication 4, **caractérisé** par le fait que le générateur de signal (5) est un générateur de signaux carrés.

6. Détecteur de métaux selon la revendication 4, **caractérisé** par le fait que le générateur de signal (5) est un générateur de signaux en dents de scie.

7. Détecteur de métaux selon l'une des revendications 4 à 6, **caractérisé** par le fait que le signal de sortie du générateur de signal (5) commandé en tension module un signal qui est dérivé du signal de la sonde et à partir duquel on obtient le signal acoustique.

8. Détecteur de métaux selon la revendication 7, **caractérisé** par le fait que le signal de sortie du générateur de signal (5) commandé en tension module la tension de l'oscillateur de détection (1) de la sonde.

9. Détecteur de métaux selon la revendication 7, **ca****ractérisé** par le fait que le signal de sortie du générateur de signal (5) commandé en tension module le signal de sortie redressé de l'oscillateur de détection (1) de la sonde.

10. Détecteur de métaux selon l'une des revendications 1 à 9, **caractérisé** par le fait que le dispositif de modulation (5) est agencé de manière telle que le signal de détection modulé est produit même lorsque la sonde est au repos.

11. Détecteur de métaux selon la revendication 10, **caractérisé** par le fait que le signal de détection modulé de la sonde passe par un circuit (3) dynamique de couplage à condensateur avant d'être transformé en un signal acoustique.

12. Détecteur de métaux selon la revendication 10, **caractérisé** par le fait que le signal de détection modulé de la sonde passe par un intégrateur avant d'être transformé en un signal acoustique.

13. Utilisation du détecteur de métaux selon l'une des revendications précédentes comme détecteur d'armes.
